(19) Europäisches Patentamt
European Patent Office
Office européen des brevets

(11) Veröffentlichungsnummer: **0 496 204 A2**

(12) **EUROPÄISCHE PATENTANMELDUNG**

(21) Anmeldenummer: **92100166.5**

(51) Int. Cl.[5]: **C08G 18/44**

(22) Anmeldetag: **08.01.92**

(30) Priorität: **25.01.91 DE 4102174**

(43) Veröffentlichungstag der Anmeldung:
**29.07.92 Patentblatt 92/31**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Bott, Kaspar, Dr.**
**Werderstrasse 57**
**W-6800 Mannheim 1(DE)**
Erfinder: **King, Horst, Dr.**
**Hauptstrasse 80 c**
**W-2844 Lemfoerde(DE)**
Erfinder: **Spang, Claudia, Dr.**
**Heinrich-Reffert-Strasse 9**
**W-6710 Frankenthal(DE)**
Erfinder: **Minges, Roland, Dr.**
**Auf der Setz 23**
**W-6718 Gruenstadt(DE)**
Erfinder: **Straehle, Wolfgang, Dr.**
**Hampeweg 9**
**W-6900 Heidelberg(DE)**

(54) **Verfahren zur Herstellung von zelligen Polyurethan-Elastomeren unter Verwendung von Polyethercarbonatdiolen als Ausgangskomponente.**

(57) Gegenstand der Erfindung ist ein Verfahren zur Herstellung von zelligen Polyurethan-Elastomeren durch Umsetzung von

a) organischen und/oder modifizierten organischen Polyisocyanaten mit

b) einem Polyetherpolycarbonatdiol, das Polyoxytetramethylenglykolreste mit einem mittleren Molekulargewicht Mn (Zahlenmittelwert) von 150 bis 500 gebunden enthält, und gegebenenfalls

c) niedermolekularen Kettenverlängerungs- und/oder Vernetzungsmitteln

in Gegenwart von

d) Treibmitteln,

e) Katalysatoren und

f) gegebenenfalls Zusatzstoffen und/oder Hilfsmitteln.

EP 0 496 204 A2

Die vorliegende Erfindung betrifft ein Verfahren zur Herstellung von zelligen Polyurethan-Elastomeren, im folgenden auch abgekürzt PU-Elastomere genannt, unter Verwendung eines Polyetherpolycarbonatdiols, das Polyoxytetramethylenglykolreste mit einem mittleren Molekulargewicht Mn (Zahlenmittelwert) von 150 bis 500 gebunden enthält.

Die Herstellung von zelligen PU-Elastomeren durch Umsetzung von organischen Polyisocyanaten mit organischen Polyhydroxylverbindungen in Gegenwart von Katalysatoren und gegebenenfalls Kettenverlängerungs- und/oder Vernetzungsmitteln sowie Treibmitteln, Hilfsmitteln und/oder Zusatzstoffen ist bekannt. Bei geeigneter Wahl der Hydroxylgruppen aufweisenden Polyester, Polyether, Polyesteramide u.a. und organischen Polyisocyanate sowie durch die zusätzliche Mitverwendung von Kettenverlängerungsmitteln, wie z.B. Glykolen, dreiwertigen Alkoholen und/oder Diaminen, können nach dieser Methode sowohl elastische wie starre, zellige PU-Elastomere sowie alle dazwischen liegende Modifikationen hergestellt werden.

Die Herstellung von PU-Elastomeren, deren mechanische Eigenschaften und Verwendung wird beispielsweise beschrieben in den Monographien High Polymers, Band XVI, "Polyurethanes", Teil I und II von I.H. Saunders und K.C. Frisch (Verlag Interscience Publishers, New York, 1962 bzw. 1964) und Kunststoff-Handbuch, Band VII, Polyurethane, 1966 und 1983 von Dr. R. Vieweg und Dr. A. Höchtlen bzw. Dr. G. Oertel (Carl-Hanser-Verlag, München).

Zellige PU-Elastomere finden wegen ihrer hervorragenden vibrations- und stoßdämpfenden Eigenschaften beispielsweise Anwendung in der Automobilindustrie zur Verbesserung der Fahrstabilität von Kraftfahrzeugen und in der Schuhindustrie als Sohlenmaterial oder Schuhkerne. Die guten mechanischen Eigenschaften derartiger PU-Elastomerer sollen über einen möglichst weiten Temperaturbereich nutzbar sein und auch bei fallenden Temperaturen erhalten bleiben.

Bisher wurden als Weichphasen in zelligen PU-Elastomeren üblicherweise Polyether-polyole oder Polyester-polyole verwendet. So wird in der US-A-4 423 205 und in der US-A-4 456 745 die Herstellung von Polyurethanen unter Verwendung der RIM-Technologie beschrieben, wobei Polycarbonatdiole aus cyclischen Carbonaten eingesetzt werden. Polyurethane, die aus Poly(tetramethylenether)glykol mit einer schmalen Molekulargewichtsverteilung hergestellt werden, sind in der EP-A-167 292 beschrieben. Polyurethane, die als Diolkomponente ein Polyetherpolycarbonatdiol aufweisen sind zwar in der US-A-4 463 141 beschrieben, jedoch liegt das mittlere Molekulargewicht Mn (Zahlenmittelwert) des eingesetzten Polyoxytetramethylendiols über 500. Polyetherpolycarbonatdiole, die aromatische Struktureinheiten aufweisen, sind in der DE-A-2 726 416 erwähnt. In der EP-A-335 416 ist ein mit Carbonatgruppen modifiziertes Polyoxytetramethylenglykol und dessen Herstellung beschrieben.

PU-Elastomere auf der Grundlage von Polyester-polyolen sind üblicherweise nicht beständig gegen Mikroorganismen. Der Ersatz von Polyester-polyolen durch die mikrobenbeständigen Polyether-polyole führt zu einer Verschlechterung der mechanischen Eigenschaften, insbesondere bei tiefen Temperaturen.

Die Aufgabe der Erfindung bestand darin, zellige PU-Elastomere zu entwickeln, die sowohl bei Raumtemperatur als auch bei tieferen Temperaturen verbesserte mechanische Eigenschaften, insbesondere eine deutlich erhöhte Bruchdehnung aufweisen.

Diese Aufgabe konnte überraschenderweise gelöst werden durch die Verwendung von speziellen Polyetherpolycarbonatdiolen als Weichphase zur Herstellung von zelligen PU-Elastomeren.

Gegenstand der Erfindung ist somit ein Verfahren zur Herstellung von zelligen Polyurethan-Elastomeren durch Umsetzung von

a) organischen und/oder modifizierten organischen Polyisocyanaten mit

b) mindestens einer höhermolekularen Polyhydroxylverbindung und gegebenenfalls

c) niedermolekularen Kettenverlängerungs- und/oder Vernetzungsmitteln in Gegenwart von

d) Treibmitteln,

e) Katalysatoren und

f) gegebenenfalls Zusatzstoffen und/oder Hilfsmitteln,

das dadurch gekennzeichnet ist, daß man als höhermolekulare Polyhydroxylverbindung (b) Polyetherpolycarbonatdiole verwendet, die hergestellt werden durch Polykondendation von

b1) Polyoxytetramethylenglykol mit einem mittleren Molekulargewicht Mn (Zahlenmittelwert) von 150 bis 500 oder

b2) einer Mischung, bestehend aus

b2i) mindestens 10 mol.-%, vorzugsweise 50 bis 95 mol.-%, des Polyoxytetramethylenglykols (b1) und

b2ii) weniger als 90 mol.-%, vorzugsweise 5 bis 50 mol.-%, mindestens eines von (b1) verschiedenen Polyoxyalkylendiols aus Alkylenoxiden mit 2 bis 4 C-Atomen im Alkylenrest, mindestens eines linearen oder verzweigtkettigen Alkandiols mit 2 bis 14 C-Atomen oder cyclischen Alkandiolen mit 3

bis 15 C-Atomen oder Mischungen aus mindestens zwei der genannten Diole (b2ii) mit

b3) Phosgen, Diphenylcarbonat oder Dialkylcarbonaten mit $C_1$- bis $C_4$-Alkylgruppen.

Gegenstand der Erfindung ist ferner die Herstellung von PU-Elastomer-Formkörpern, vorzugsweise Stoßdämpfer, nach dem Verfahren gemäß Anspruch 1.

Die nach dem erfindungsgemäßen Verfahren hergestellten zelligen PU-Elastomeren besitzen verbesserte mechanische Eigenschaften und zeichnen sich insbesondere durch eine sehr gute Bruchdehnung aus. Bemerkenswert ist ferner die problemlose Verarbeitbarkeit der PU-Formulierungen nach der Niederdrucktechnik.

Zu den für das erfindungsgemäße Verfahren verwendbaren Ausgangskomponenten (a), (b), (d), (e) und gegebenenfalls (c) und (f) zur Herstellung der zelligen PU-Elastomeren ist folgendes auszuführen:

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyannat-1,4, 2-Methyl-pentamethylen-diisocyanat-1,5-diisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Diisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten und insbesondere 4,4'-Diphenylmethan-diisocyanat und 1,5-Naphthylen-diisocyanat. Die organischen Diisocyanate können einzeln oder in Form von Mischungen eingesetzt werden.

Als organische Polyisocyanate geeignet sind auch sogenannte modifizierte mehrwertige Isocyanate, d.h. Produkte, die durch chemische Umsetzung organischer Polyisocyanate erhalten werden. Beispielhaft genannt seien Ester-, Harnstofff-, Biuret-, Allophanat-, Carbodiimid-, und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 14 Gew.%, vorzugsweise von 28 bis 16 Gew.%, bezogen auf das Gesamtgewicht, beispielsweise mit niedermolekularen Diolen, Triolen, Dialkylen-glykolen, Trialkylen-glykolen oder Polyoxyalkylen-glykolen mit Molekulargewichten bis 3000 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen, Dibutylen-, Polyoxyethylen-, Polyoxypropylen-, Polyoxytetramethylen- und Polyoxypropylen-polyoxyethylen-glykole. Geeignet sind auch NCO-Gruppen enthaltende Prepolymere mit NCO-Gehalten von 14 bis 2,5 Gew.%, vorzugsweise von 9 bis 3,0 Gew.%, bezogen auf das Gesamtgewicht, hergestellt aus den oben genannten Polyoxyalkylen-glykolen und vorzugsweise den nachfolgend beschriebenen erfindungsgemäß verwendbaren Polyetherpolycarbonatdiolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder 1,5-Naphthylen-diisocyanat. Bewährt haben sich ferner flüssige Carbodiimidgruppen enthaltende Polyisocyanate mit NCO-Gehalten von 33,6 bis 15, vorzugsweise 31 bis 21 Gew.-%, bezogen das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, 2,4- und/oder 2,6-Toluylen-diisocyanat gegebenenfalls gemischt werden, wobei jedoch die Funktionalität der erhaltenen Polyisocyanatmischung maximal 3, vorzugsweise 2 bis 2,6 und insbesondere 2,0 bis 2,4 beträgt.

Besonders bewährt haben sich als organische Polyisocyanate und kommen daher vorzugsweise zur Anwendung: 1,6-Hexamethylen-diisocyanat, Isophoron-diisocyanat und insbesondere 4,4'-Diphenylmethan-diisocyanat und 1,5-Naphthylen-diisocyanat sowie die flüssigen mit Urethan-, Carbodiimid- oder Urethan- und Carbodiimidgruppen modifizierten Polyisocyanate auf der Grundlage von Mischungen aus 4,4'- und 2,4'-Diphenylmethan-diisocyanaten und insbesondere von 4,4'-Diphenylmethan-diisocyanat.

b.) Die höhermolekulare Polyhydroxylverbindung (b) besteht aus mindestens einem Polyetherpolycarbonatdiol, die hergestellt werden durch Polykondensation von

b1) Polyoxytetramethylenglykol mit einem mittleren Molekulargewicht Mn (Zahlenmittelwert) von 150 bis 500, vorzugsweise 150 bis 400 und insbesondere 200 von 350 oder

b2) einer Mischung, bestehend aus

b2i) mindestens einem Polyoxytetramethylenglykol (b1) und

b2ii) mindestens einem von (b1) verschiedenen Polyoxyalkylendiol mit einem Molekulargewicht von 150 bis 2000, vorzugsweise von 500 bis 2000, hergestellt z.B. durch anionische Polymerisation in Gegenwart von Alkalihydroxiden oder -alkoholaten als basischer Katalysator und unter Zusatz mindestens eines difunktionellen Startermoleküls oder durch kationische Polymerisation mit Lewissäuren oder Bleicherde als Katalysator aus einem oder mehreren Alkylenoxiden mit 2 bis 4 C-Atomen im Alkylenrest, z.B. 1,3-Propylenoxid, 1,2- bzw. 2,3-Butylenoxid und vorzugsweise Ethylenoxid, 1,2-Propylenoxid und Tetrahydrofuran,

mindestens einem linearen oder verzweigten Alkandiol mit 2 bis 14 C-Atomen, vorzugsweise 2 bis 6 C-Atomen oder mindestens einem cyclischen Alkandiol mit 3 bis 15 C-Atomen, vorzugsweise 5 bis 8 C-Atomen oder Mischungen aus mindestens zwei der genannten Diole (b2ii) in den vorgenannten Mengenverhältnissen von (b2i) : (b2ii) mit

b3) Phosgen, Diphenylcarbonat oder Dialkylcarbonaten mit $C_1$- bis $C_4$-Alkylgruppen.

Das Polyoxytetramethylenglykol (b1) kann nach bekannten Methoden, z.B. durch kationische Polymerisation von Tetrahydrofuran hergestellt werden.

Zur Modifikation der mechanischen Eigenschaften der PU-Elastomeren sowie der Polyetherpolycarbonatdiole können zu ihrer Herstellung auch Mischungen aus (b2i) und den Diolen (b2ii) verwendet werden.

Als von (b1) verschiedene Polyoxyalkylendiole finden vorzugsweise Polyoxytetramethylenglykole mit Molekulargewichten größer als 500, insbesondere von 650 bis 2000 Verwendung. Geeignet sind jedoch auch Polyoxyethylen-, Polyoxypropylen-, Polyoxypropylen-polyoxyethylen-, Polyoxytetramethylen-polyoxypropylen- oder Polyoxytetramethylen-polyoxyethylen-glykole.

Als geeignete lineare oder verzweigtkettige Alkandiole seien beispielhaft genannt: Ethan-, 1,3- und 1,2-Propan-, 2,2-Dimethylpropan-1,3-, 1,3- und 1,4-Butan-, 1,5-Pentan-, 1,6-Hexan-, 1,7-Heptan-, 1,8-Octan-, 1,10-Decan- und 1,12-Dodecandiol. Weiterhin haben sich cyclische Alkandiole, wie z.B. 1,4-Dihydroxy-cyclohexan, 1,4-Di-(hydroxymethyl)cyclohexan und 4,4'-Dihydroxy-dicyclohexylmethan als brauchbar erwiesen.

Die Diole (b2ii) können einzeln oder in Form von Mischungen verwendet werden.

Zur Herstellung der Polyether-polycarbonatdiole wird vorzugsweise das Polyoxytetramethylendiol (b1) verwendet. Sofern jedoch Mischungen aus (b1) und (b2ii) gemäß voranstehender Beschreibung Anwendung finden, enthalten diese mindestens 10 mol.-%, vorzugsweise 50 bis 95 mol.-% und insbesondere 60 bis 90 mol.-% (b1), bezogen auf (b1) und (b2ii).

Als Komponente b3) kann Phosgen in reiner oder technischer Form oder verdünnt mit unter den Kondensationsbedingungen inerten Gasen verwendet werden. Als Carbonate sind Dialkylcarbonate mit $C_1$- bis $C_4$-Alkylgruppen bevorzugt, insbesondere Dimethylcarbonat, Diethylcarbonat und Dipropylcarbonat. Geeignet ist ferner Diphenylcarbonat. Verwendbar sind ferner Mischungen der Carbonate.

Das Mengenverhältnis von Polyoxytetramethylendiol b2i), gegebenenfalls mit weiteren Diolen b2ii), zur Carbonatkomponente b3) richtet sich nach dem gewünschten Molekulargewicht des Polyetherpolycarbonatdiols und nach der eingesetzten Carbonatkomponente.

In einigen Fällen treten Verluste an eingesetztem Carbonat bei der Umsetzung auf, so daß dieses in größeren Mengen eingesetzt werden muß. Im Fall von Phosgen hängt der überschuß davon ab, wieviel Phosgen mit der gebildeten Salzsäure ausgetrieben wird und im besonders bevorzugten Fall von Dialkylcarbonaten, ob das eingesetzte Carbonat mit dem bei der Umesterung entstehenden Alkohol ein Azeotrop bildet oder nicht, wobei der überschuß 0,5 bis 50 mol-%, bevorzugt 5 bis 35 mol-% beträgt.

Die Umsetzung von b1), gegebenenfalls in Mischung mit b2ii) mit der Carbonatkomponente wird bevorzugt in Gegenwart von Katalysatoren durchgeführt.

Als Katalysatoren können die üblichen Umesterungskatalysatoren wie z.B. Tetraisopropylorthotitanat, Dibutylzinnoxid, Dibutylzinndilaurat und Zirkon-IV-acetylacetonat sowie Alkalialkoholate, beispielsweise Natriummethylat und Natrium-, Kaliumethylat, verwendet werden. Die Menge an Katalysator beträgt 0,001 bis 2 %, bevorzugt 0,01 bis 0,5 %, bezogen auf die Gesamtmenge der Einsatzstoffe.

Die Reaktionskomponenten werden vorzugsweise mit dem Katalysator zum Sieden erhitzt, wobei bei der Verwendung von Dialkylcarbonaten der dabei gebildete entsprechende Alkohol oder das Azeotrop aus Carbonat und Alkohol destillativ abgetrennt werden kann. Die Umesterung findet i.a. bei Temperaturen von 20 bis 250 °C statt, bevorzugt bei 40 bis 200 °C. Verwendet man Phosgen, so kann bei Temperaturen von 0 bis 100 °C gearbeitet werden, vorzugsweise bei 20 bis 80 °C. In diesem Fall wird der Reaktionsmasse zur Neutralisation der entstehenden Salzsäure bevorzugt eine Base, beispielsweise Pyridin oder Triethylamin hinzugegeben.

Bei der Verwendung von Alkalialkoholaten als Katalysator wird eine Reaktionstemperatur von 20 bis

150 ° C bevorzugt, insbesondere 40 bis 80 ° C, wobei zur Abtrennung des Katalysators dieser mit einer Säure wie Phosphorsäure neutralisiert wird, und das ausfallende Alkalisalz der betreffenden Säure abgetrennt wird.

Bei der Verwendung von Tetraisopropylorthotitanat als Katalysator wird eine Reaktionstemperatur von 40 bis 250 ° C bevorzugt, insbesondere 100 bis 200 ° C, wobei der überschüssige Katalysator nach erfolgter Reaktion beispielsweise durch Hinzufügen von Phosphorsäure desaktiviert werden kann.

Die Reaktion kann bei Normaldruck, unter vermindertem Druck oder überdruck durchgeführt werden. Üblicherweise wird am Ende der Reaktion ein verminderter Druck von 0,1 bis 5 mbar zur Entfernung der letzten Reste an leichter siedenden Anteilen angelegt. Die Reaktion ist beendet, wenn keine leichter siedenden Anteile mehr überdestillieren.

Die entstandenen Polyetherpolycarbonatdiole weisen ein durchschnittliches Molekulargewicht Mn (Zahlenmittelwert) von 800 bis 8 000, vorzugsweise von 1 200 bis 6 000 und insbesondere von 1 800 bis 4 200, auf.

c) Die zelligen PU-Elastomeren können ohne oder unter Mitverwendung von Kettenverlängerungs- und/oder Vernetzungsmitteln hergestellt werden. Zur Modifizierung der mechanischen Eigenschaften, z.B. der Härte, Elastizität u.a., kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Zur Herstellung zelliger PU-Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3',5,5'-tetraalkylsubstituierteDiaminodiphenylmethane Anwendung finden.

Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p-bzw. -m-Phenylendiamin, N,N'-Dimethyl-, N,N'-Diethyl-, N,N'-Diisopropyl-, N,N'-Di-sek-butyl-, N,N'-Dicyclohexyl-4,4'-diaminodiphenylmethan und N,N'-Di-sek-butyl-benzidin.

Als aromatische Diamine werden zweckmäßigerweise solche verwendet, die in ortho-Stellung zu den Aminogruppen mindestens einen Alkylsubstituenten besitzen, bei Raumtemperatur flüssig und mit den Polyetherpolycarbonatdiolen mischbar sind. Bewährt haben sich ferner alkylsubstituierte meta-Phenylendiamine der Formeln

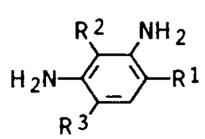

und/oder

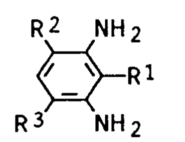

,

in denen $R^3$ und $R^2$ gleich oder verschieden sind und einen Methyl-, Ethyl-, Propyl- und Isopropylrest bedeuten und $R^1$ ein linearer oder verzweigter Alkylrest mit 1 bis 10, vorzugsweise 4 bis 6 Kohlenstoffatomen ist.

Insbesondere bewährt haben sich solche Alkylreste $R^1$, bei denen die Verzweigungsstelle am $C^1$-Kohlenstoffatom sitzt. Als Reste $R^1$ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- bzw. -2,6-phenylendiamine, 2,4-Dimethyl-6-tert.butyl-, 2,4-Dimethyl-6-isooctyl-und 2,4-Dimethyl-6-cyclohexyl-m-phenylendiamin-1,3.

Geeignete 3,3'-di- und 3,3',5,5'-tetra-n-alkylsubstituierte 4,4'-Diamino-diphenylmethane sind beispielsweise 3,3'-Di-, 3,3',5,5'-Tetramethyl-, 3,3'-Di-, 3,3',5,5'-Tetraethyl-, 3,3'-Di- und 3,3',5,5'-Tetra-n-propyl-4,4'-diamino-diphenylmethan.

Vorzugsweise verwendet werden Diamino-diphenylmethane der Formel

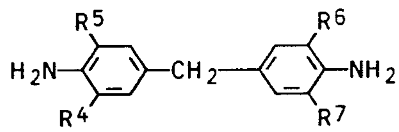

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln

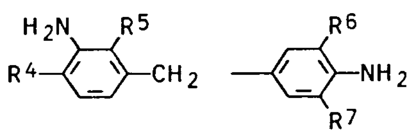

und/oder

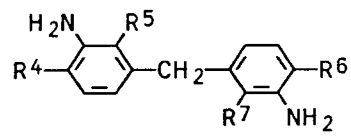

verwendet werden, wobei $R^4$, $R^5$, $R^6$ und $R^7$ die obengenannte Bedeutung haben.

Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.

Die genannten Kettenverlängerungsmittel und/oder Vernetzungsmittel (c) können einzeln oder als Mischungen von gleichen oder verschiedenen Verbindungsarten verwendet werden.

Sofern Kettenverlängerungsmittel, Vernetzungsmittel oder Mischungen davon Anwendung finden, kommen diese zweckmäßigerweise in Mengen von 2 bis 60 Gew.%, vorzugsweise 8 bis 50 Gew.% und insbesondere 10 bis 40 Gew.%, bezogen auf das Gewicht der Polyetherpolycarbonatdiole (b) und (c) zum Einsatz.

d) Als Treibmittel (d) findet vorzugsweise Wasser Verwendung, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Das Wasser wird üblicherweise in Mengen von 0,05 bis 6 Gew.%, vorzugsweise von 0,1 bis 4 Gew.% und insbesondere von 0,15 bis 2,5 Gew.%, bezogen auf das Gewicht der Aufbaukomponente (a), (b) und gegebenenfalls (c) verwendet.

Als Treibmittel (d) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120 ° C, vorzugsweise von 10 bis 90 ° C besitzen, oder Gase eingesetzt werden.

Die als Treibmittel geeigneten Flüssigkeiten der oben genannten Art und Gase können z.B. ausgewählt werden aus der Gruppe der Alkane, die vorteilhafterweise 3 bis 5 C-Atome aufweisen, wie z.B. Propan, n- und iso-Butan, n- und iso-Pentan und vorzugsweise der technischen Pentangemische, Cycloalkane, die vorteilhafterweise 4 bis 6 C-Atome besitzen, wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, Cycloalkylenether, wie z.B. Furan, Ketone, wie z.B. Aceton, Methylethylketon, Carbonsäureester, wie Methylformiat, Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase wie z.B. Helium, Neon und Krypton.Verwendbar sind ferner Fluorchlorkohlenwasserstoffe, wie z.B. Trichlorfluormethan oder Trichlortrifluorethan und vorzugsweise Difluorchlormethan, Difluorchlorethane, vorteilhafterweise 1-Chlor-1,1-difluorethan, 1,1,1-Trifluor-2,2-dichlorethan oder Mischungen aus mindestens 2 dieser Treibmittel.

Die zweckmäßigste Menge an niedrigsiedenden Flüssigkeiten und Gasen, die jeweils einzeln oder als Flüssigkeits- oder Gasmischungen oder als Gasflüssigkeitsgemische eingesetzt werden können, hängt ab von der Dichte, die man erreichen will und der eingesetzten Menge an Wasser. Die erforderlichen Mengen können durch einfache Handversuche leicht ermittelt werden. Zufriedenstellende Ergebnisse liefern üblicherweise Flüssigkeitsmengen von 0,5 bis 20 Gew.-Teilen, vorzugsweise von 2 bis 10 Gew.-Teilen und Gasmengen von 0,01 bis 30 Gew.-Teilen, vorzugsweise von 2 bis 20 Gew.-Teilen, jeweils bezogen auf 100 Gew.-Teile der Komponenten (a), (b) und gegebenenfalls (c).

Als Katalysatoren (e) zur Herstellung der PU-Elastomeren werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutylzinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N'N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin.

f) Zur Herstellung der zelligen PU-Elastomeren können gegebenenfalls auch Zusatzstoffe und/oder Hilfsmittel (f) mitverwendet werden.

Als Zusatzstoffe und Hilfsmittel genannt seien beispielsweise oberflächenaktive Substanzen, Schaumstabilisatoren, Zellregler, Gleitmittel, Füllstoffe, Farbstoffe, Pigmente, kristalline, mikroporöse Molekularsiebe, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Zur Herstellung von PU-Elastomer-Formkörpern mit einer im wesentlichen porenfreien, glatten Oberfläche bei Verwendung von Wasser oder wasserhaltigen physikalisch wirkenden Treibmitteln hat sich insbesondere der Zusatz von kristallinen, mikroporösen Molekularsieben mit einem Durchmesser der Hohlräume von kleiner als 1,3 nm, vorzugsweise kleiner als 0,7 nm aus Metalloxiden oder Metallphosphaten vorzüglich

bewährt. Molekularsiebe dieser Art werden in der Literatur beschrieben.

Geeignete Metalloxide bestehen im wesentlichen aus Aluminium-Siliciumoxid, Bor-Siliciumoxid, Eisen-(III)-Siliciumoxid, Gallium-Siliciumoxid, Chrom(III)-Siliciumoxid, Beryllium-Siliciumoxid, Vanadium-Siliciumoxid, Antimon(V)-Siliciumoxid, Arsen(III)-Siliciumoxid, Titan(IV)-Siliciumoxid,Aluminium-Germaniumoxid, Bor-Germaniumoxid, Aluminium-Zirkonoxid und Aluminium-Hafniumoxid. Beispielhaft genannt seien Aluminiumsilikat-, Borsilikat-, Eisensilikatzeolithe oder Galliumsilikatzeolithe mit Pentasilstruktur. Vorzugsweise Anwendung finden Mordenit in der H-Form, Na-Form oder Ammoniumform, Offretit in der H-Form, K-Form, Na-Form oder Ammoniumform, Zeolith ZSM-5 in der H-Form, Na-Form oder Ammoniumform, Zeolith ZSM-11, Zeolith ZSM-12, Beta-Zeolith, Clinopthilolith, Ferrierit, ultrastabiler Y-Zeolith, ultrastabiler Mordenit oder Silicalite oder Mischungen aus mindestens 2 der genannten Zeolithe.

Als Metallphosphate kommen Aluminium- oder Siliciumaluminiumphosphate in Betracht, die zusätzlich Kationen des Lithiums, Berylliums, Bors, Magnesiums, Galliums, Germaniums, Arsens, Titans, Mangans, Eisens, Kobalts oder Zinks enthalten können. Als Metallphosphate der genannten Art seien beispielsweise genannt APO, SAPO, ELAPO, ELAPSO, MeAPO oder MeAPSO. Vorzugsweise Anwendung finden Zirkonphosphate in der H-Form, Na-Form oder Ammoniumform, Zirkonphosphatsilikate, Titanphosphate, VPI-5 oder MCM-9.

Die kristallinen, mikroporösen Molekularsiebe mit einem Durchmesser der Hohlräume von kleiner als 1,3 nm aus Metalloxiden oder Metallphosphaten werden üblicherweise in einer Menge von 1 bis 30 Gew.-%, vorzugsweise 5 bis 20 Gew.-% und insbesondere mehr als 10 bis 16 Gew.-%, bezogen auf das Gewicht der Komponenten (b) und gegebenenfalls (c) verwendet.

Geeignete Flammschutzmittel sind beispielsweise Trikresylphosphat, Tris-(-2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Blähgraphit, Melamin und Ammoniumpolyphosphat, Ammoniumpolyphosphaten und Melamin sowie gegebenenfalls Stärke zum Flammfestmachen der erfindungsgemäß hergestellten Formkörper verwendet werden. Im allgemeinen hat es sich als zweckmäßig erwiesen, 2 bis 40 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Elastomeren oder Formkörper aus PU-Elastomeren werden die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zur Umsetzung gebracht, daß das Äquivalenz-Verhältnis von NCO-Gruppen der Polyisocanate (a) zur Summe der reaktiven Wasserstoffatome der Komponenten (b) und gegebenenfalls (c) 1:0,3 bis 1:2, vorzugsweise 1:0,4 bis 1:1,7 und insbesondere 1:0,9 bis 1:1,1 beträgt.

Die PU-Elastomeren oder Formkörper aus PU-Elastomeren können nach bekannten Verfahren, wie z.B. dem Prepolymer-, Semiprepolymer-Verfahren oder one shot-Verfahren mit Hilfe der Hochdrucktechnik oder vorzugsweise der Niederdrucktechnik hergestellt werden. Die Herstellung von Formkörpern wird zweckmäßigerweise in geschlossenen, temperierbaren Formwerkzeugen, z.B. metallischen Formwerkzeugen, beispielsweise aus Aluminium, Gußeisen oder Stahl, oder Formwerkzeugen aus faserverstärkten Polyester- oder Epoxidharzformmassen, durchgeführt. Niedrigviskose, gut fließfähige und daher verbessert verarbeitbare Formulierungen können auch mit Hilfe der Reaktionsspritzgußtechnik (RIM-Technik) zu Formkörpern verarbeitet werden.

Diese Verfahrensweisen werden beispielsweise beschrieben von Dr. H. Piechota und Dr. H. Röhr in "Integralschaumstoffe", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponenten-Verfahren zu arbeiten und die Aufbaukomponenten (b), (d), (e), und gegebenenfalls (c) und (f) in der Komponente (A) zu vereinigen und als Komponente (B) die organischen Polyisocyanate, modifizierten Polyisocyanate (a) oder Mischungen

aus den genannten Polyisocyanaten und gegebenenfalls Treibmittel (d) zu verwenden.

Die Ausgangskomponenten werden bei einer Temperatur von 15 bis 100 °C, vorzugsweise von 25 bis 55 °C gemischt und bei Normaldruck oder unter erhöhtem Druck in das offene oder geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120 °C, vorzugsweise 30 bis 80 °C und insbesondere 45 bis 65 °C. Sofern die Formkörperherstellung in einem geschlossenen Formwerkzeug durchgeführt wird, liegen die Verdichtungsgrade im Bereich von 1,2 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,1 bis 0,98 g/cm$^3$, vorzugsweise von 0,3 bis 0,7 g/cm$^3$ besitzen. Durch den Zusatz von Füllstoffen können auch Dichten bis 1,2 g/cm$^3$ und größer erreicht werden.

Die nach dem erfindungsgemäßen Verfahren hergestellten zelligen PU-Elastomeren oder Formkörper aus zelligen PU-Elastomeren finden beispielsweise Verwendung in der Kraftfahrzeugindustrie, z.B. als Puffer- oder Federelemente und Stoßdämpfer sowie als Fahrrad- oder Motorradsattel. Sie eignen sich ferner als Fender und als Schuhkerne oder -sohlen.

## Beispiele

Die Bestimmung der OH-Zahl und des mittleren Molekulargewichts Mn (Zahlenmittelwert) wurde wie folgt durchgeführt:
Das mittlere Molekulargewicht Mn (Zahlenmittelwert) wurde aus der OH-Zahl errechnet (Mn = 112 200/OH-Zahl). Die OH-Zahl wurde durch potentiometrische Titration nach der PSA-Methode bestimmt.

### Beispiel 1

Herstellung der Polyethercarbonatdiole

1750 g (7,54 mol) Polyoxytetramethylendiol mit Mn = 232 und 778 g (6.59 mol) Diethylcarbonat wurden mit 12,5 g (0,5 Gew.-%) Tetraisopropylorthotitanat zum Sieden erhitzt und das dabei gebildete Ethanol ständig in einer Destillationskolonne (25 cm Füllhöhe, Füllkörper: 5 mm V-Stahl-Netze) unter Normaldruck bei einem Rücklaufverhältnis von 4:1 vom nicht umgesetzten Diethylcarbonat abdestilliert. Die Reaktion wurde bei einer Temperatur von 180 °C durchgeführt. Die leichtersiedenden Anteile wurden unter vermindertem Druck bei 0,3 mbar (30 Pa) abgetrennt.
Ausbeute: 1920 g
Mn = 1970
OH-Zahl = 57.

### Beispiel 2

Herstellung eines zelligen PU-Elastomeren nach dem Semiprepolymer-Verfahren.

A-Komponente:

| | |
|---|---|
| 1 000 g | (0,508 mol) Polyethercarbonatdiol, hergestellt gemäß Beispiel 1, wurden bei einer Temperatur von 40 °C mit |
| 110 g | (1,774 mol) Ethylenglykol, |
| 5 g | Triethylendiamin (Diazabicyclooctan), |
| 1,7 g | Stabilisator auf Silikonbasis (DC 193 der Firma Dow Corning) und |
| 40 g | Trichlortrifluorethan |

vermischt. Durch Zugabe von Wasser wurde der Wassergehalt auf 0,3 Gew.-%, bezogen auf das Gesamtgewicht eingestellt.

B-Komponente:

Urethangruppen enthaltende Polyisocyanatmischung mit einem NCO-Gehalt von 19 Gew.-%, die hergestellt wurde durch Umsetzung von 1000 g (4 mol) 4,4'-Diphenylmethan-diisocyanat mit 600 g (0,3 mol)

Polyoxytetramethylenglykol mit einem mittleren Molekulargewicht von 2000 in 1,5 Stunden bei 80 °C und anschließender Abkühlung der Reaktionsmischung auf 40 °C.

Zur Herstellung des Formkörpers wurden
100 Gew.-Teile der A-Komponente und
97 Gew.-Teile der B-Komponente
bei 40 °C unter Rühren intensiv vermischt.

375 g der Reaktionsmischung wurden in ein auf 60 °C temperiertes, plattenförmiges, metallisches Formwerkzeug mit den inneren Abmessungen 250 x 100 x 30 mm eingefüllt, das Formwerkzeug verschlossen und die Reaktionsmischung aufschäumen und aushärten gelassen.

Nach 10 Minuten wurde das zellige PU-Elastomere entformt. Es besaß eine Dichte von 500 g/Liter.

Vergleichsbeispiel I

Man verfuhr analog den Angaben des Beispiels 1, verwendete jedoch anstelle des Polyethercarbonatdiols 1000 g eines Polyoxytetramethylenglykols mit einem durchschnittlichen Molekulargewicht von 2000.

Die an den Formkörpern gemessenen mechanischen Eigenschaften sind in der nachfolgenden Tabelle zusammengefaßt.

Beispiel 3

Herstellung eines zelligen PU-Elastomeren nach dem Prepolymerverfahren.

Bei einer Temperatur von 130 °C wurden
700 g (0,355 mol) Polyethercarbonatdiol, hergestellt gemäß Beispiel 1, und
240 g (1,143 mol) 1,5-Naphthylen-diisocyanat
unter Rühren gemischt und 30 Minuten lang zur Reaktion gebracht. Danach ließ man die Reaktionsmischung langsam auf 90 °C abkühlen. Man erhielt ein NCO-Gruppen enthaltendes Prepolymer mit einem NCO-Gehalt von 6,5 Gew.-%.

Zu 100 Gew.-Teilen dieses NCO-Gruppen enthaltenden Prepolymeren fügte man unter intensivem Rühren bei 90 °C
2,6 Gew.-Teile eines Fettsäureesters (50 gew.%ige wäßriger Emulgator, Zusatzmittel SM der Bayer AG),
1,0 Gew.-Teile Triethylendiamin und
3,4 Gew.-Teile Polyethercarbonatdiol, hergestellt gemäß Beispiel 1,

375 g der Reaktionsmischung wurden in das auf 50 °C temperierte in Beispiel 2 beschriebene Formwerkzeug eingebracht, das Formwerkzeug verschlossen und die Reaktionsmischung aufschäumen und 20 Minuten lang aushärten gelassen.

An den erhaltenen Formkörper wurden die nachfolgen genannten mechanischen Eigenschaften gemessen.

Vergleichsbeispiel II

Man verfuhr analog den Angaben des Beispiels 3, verwendete jedoch anstelle des Polyethercarbonatdiols 1000 g eines Polyoxytetramethylenglykols mit einem durchschnittlichen Molekulargewicht von 2000.

Tabelle

| Mechanische Eigenschaften der hergestellten zelligen PU-Elastomeren | | | | |
|---|---|---|---|---|
| Beispiel | 2 | | 3 | |
| Vergleichsbeispiel | | I | | II |
| Dichte (DIN 53420) [g/Liter] | 500 | 500 | 500 | 500 |
| Zugfestigkeit (DIN 53 571) [N/mm$^2$] | 4,3 | 5,2 | 3,0 | 4,0 |
| Bruchdehnung (DIN 53 571) [%] | 590 | 460 | 480 | 260 |
| Weiterreißwiderstand (DIN 53 515) [N/mm] | 12,9 | 12,4 | 14,3 | 12,8 |
| Druckverformungsrest 70 °C (DIN 53 572) [%] | 14,0 | 12,4 | 6,2 | 6,5 |

## Patentansprüche

1. Verfahren zur Herstellung von zelligen Polyurethan-Elastomeren durch Umsetzung von
   a) organischen und/oder modifizierten organischen Polyisocyanaten mit
   b) mindestens einer höhermolekularen Polyhydroxylverbindung und gegebenenfalls
   c) niedermolekularen Kettenverlängerungs- und/oder Vernetzungsmitteln
   in Gegenwart von
   d) Treibmitteln,
   e) Katalysatoren und
   f) gegebenenfalls Zusatzstoffen und/oder Hilfsmitteln,

   dadurch gekennzeichnet, daß man als höhermolekulare Polyhydroxylverbindung (b) Polyetherpolycarbonatdiole verwendet, die hergestellt werden durch Polykondendation von
   b1) Polyoxytetramethylenglykol mit einem mittleren Molekulargewicht Mn (Zahlenmittelwert) von 150 bis 500 oder
   b2) einer Mischung, bestehend aus
   b2i) mindestens 10 mol.-% des Polyoxytetramethylenglykols (b1) und
   b2ii) weniger als 90 mol.-%, mindestens eines von (b1) verschiedenen Polyoxyalkylendiols aus Alkylenoxiden mit 2 bis 4 C-Atomen im Alkylenrest, mindestens eines linearen oder verzweigtkettigen Alkandiols mit 2 bis 14 C-Atomen oder cyclischen Alkandiols mit 3 bis 15 C-Atomen oder Mischungen aus mindestens zwei der genannten Diole (b2ii)
   mit
   b3) Phosgen, Diphenylcarbonat oder Dialkylcarbonaten mit $C_1$- bis $C_4$-Alkylgruppen.

2. Verfahren nach Anspruch 1, dadurch gekennzeichnet, daß die zelligen Polyurethan-Elastomeren eine Gesamtdichte von 0,1 bis 0,95 g/cm$^3$ besitzen.

3. Verfahren nach Anspruch 1, dadurch gekennzeichnet, daß als organische Polyisocyanate (a) 4,4'-Diphenylmethan-diisocyanat oder 1,5-Naphthylen-diisocyanat verwendet werden.

4. Verfahren nach Anspruch 1, dadurch gekennzeichnet, daß die Polyetherpolycarbonatdiole ein mittleres Molekulargewicht von 800 bis 8 000 besitzen.

5. Verfahren nach Anspruch 1, dadurch gekennzeichnet, daß die Polyoxytetramethylenglykole (b1) ein mittleres Molekulargewicht Mn (Zahlenmittelwert) von 150 bis 400 besitzen.

6. Verfahren nach Anspruch 1, dadurch gekennzeichnet, daß man als Treibmittel Wasser verwendet.

7. Verfahren nach Anspruch 1, dadurch gekennzeichnet, daß man als Treibmittel Alkane mit 3 bis 5 C-Atome und/oder Cycloalkane mit 4 bis 6 C-Atomen verwendet.

8. Verfahren nach Anspruch 1, dadurch gekennzeichnet, daß man als Zusatzstoff (f) kristalline, mikroporöse Molekularsiebe mit einem Durchmesser der Hohlräume von kleiner als 1,3 aus Metalloxiden oder Metallphosphaten verwendet.

9. Verfahren nach Anspruch 1, dadurch gekennzeichnet, daß man die Umsetzung in einem geschlossenen Formwerkzeug unter Verdichtung durchführt.

10. Verfahren zur Herstellung von zelligen Formkörpern, vorzugsweise Stoßdämpfer, nach dem Verfahren gemäß Anspruch 1.